# EUROPÄISCHE PATENTANMELDUNG

(11) **EP 4 570 511 A1**
(43) Veröffentlichungstag der Anmeldung: **18.06.2025**
(21) Anmeldenummer: 24212545.8
(22) Anmeldetag: 13.11.2024
(51) Int. Cl.: B60C 5/00, B60C 5/02, B60C 7/10, B60C 19/12

(54) **FAHRSCHLAUCH UND FAHRZEUGRAD**

(30) Priorität: 13.12.2023 DE 102023212574
(71) Anmelder: Continental Reifen Deutschland GmbH, 30175 Hannover (DE)
(72) Erfinder: Krieger, Ralf, 30175 Hannover (DE); Grion, Mario, 30175 Hannover (DE)
(74) Vertreter: Continental Corporation

(57) **Zusammenfassung**

Die Erfindung betrifft einen Fahrschlauch (1) für ein Fahrzeug, bevorzugt für ein Leichtfahrzeug, besonders bevorzugt für ein Fahrrad und/oder einen Rollstuhl und/oder ein Motorrad, mit einem Schlauchkörper (3) aus einem Elastomer.

Aufgabe ist einen derartigen Fahrschlauch zur Verfügung zu stellen, der eine verbesserte Pannensicherheit bei nur geringfügig höherem Rollwiderstand aufweist.

Dies wird dadurch erreicht, dass das Elastomer ein expandiertes geschlossenporiges Elastomer ist.

## Beschreibung

Die Erfindung betrifft einen Fahrschlauch für ein Fahrzeug, bevorzugt für ein Leichtfahrzeug, besonders bevorzugt für ein Fahrrad und/oder einen Rollstuhl und/oder ein Motorrad, mit einem Schlauchkörper aus einem Elastomer. Die Erfindung betrifft weiter ein Fahrzeugrad aufweisend einen solchen Fahrschlauch.

Fahrschläuche für Fahrzeuge, bevorzugt für Leichtfahrzeuge, besonders bevorzugt für ein Fahrrad und/oder einen Krankenfahrstuhl und/oder ein Motorrad, sind allgemein bekannt. Der Fahrschlauch für ein Fahrzeug ist zusammen mit einem Fahrzeugluftreifen für das Fahrzeug auf einer Felge zu einem für das Fahrzeug geeigneten Rad montierbar. Der Fahrschlauch besteht in der Regel zumindest aus einem einen Innenraum begrenzenden Schlauchkörper sowie einem Ventilschaft mit Ventil, durch welches der Innenraum des Fahrzeugschlauchs mit Luft beaufschlagbar ist.

Zur Reduzierung der Pannenhäufigkeit von Fahrzeugluftreifen sind verschiedene Strategien bekannt. So kann der Reifen selbst verstärkt werden, beispielsweise durch eine Vergrößerung der Gummidicke einzelner Bauteile des Reifens, wie etwa dem Laufstreifen, oder durch zusätzliche und/oder stärkere Festigkeitsträgerlagen. Durch derartige Maßnahmen kann beispielsweise das Durchdringen eines Festkörpers durch den Reifen erschwert oder gar verhindert werden.

Bei einem Fahrzeugrad mit einem Fahrschlauch erfüllt der Fahrschlauch in der Regel die primäre Aufgabe, die Luftdichtigkeit des Rades im regulären Betrieb sicherzustellen. Doch der Fahrschlauch kann auch zur Reduzierung der Pannenhäufigkeit beitragen.

Zur Abdichtung von Beschädigungen des Fahrschlauches ist es bekannt, Dichtmittel wie etwa flüssig-viskose Füllmaterialien in den Innenraum des Fahrschlauches vorzusehen, welche im Falle einer Beschädigung des Fahrschlauches das Loch abdichten sollen.

Mit derartigen Maßnahmen einher geht allerdings oftmals ein erhöhter Materialaufwand und damit verbunden ein erhöhter Rollwiderstand des Reifens und ein unvorteilhaftes Fahrverhalten.

Aus der DE 3021946 A1 sind Reifen mit einem inneren massiven Füllkörper aus einem Luftblasen enthaltenden Polyurethan bekannt. Hierdurch sind die Reifen zwar unempfindlich gegenüber Durchstich, dies ist aber mit einem erheblichen Materialeinsatz verbunden.

Es war die primäre Aufgabe der vorliegenden Erfindung, die vorstehend beschriebenen Nachteile des Standes der Technik auszuräumen oder zumindest zu verringern. Es war dabei die primäre Aufgabe, einen Fahrschlauch für ein Fahrzeug, bevorzugt für ein Leichtfahrzeug, besonders bevorzugt für ein Fahrrad und/oder einen Rollstuhl und/oder ein Motorrad, zur Verfügung zu stellen, der eine verbesserte Pannensicherheit bei weiterhin gutem Rollwiderstand aufweist.

Die Aufgabe wird dadurch gelöst, dass das Elastomer ein expandiertes geschlossenporiges Elastomer ist.

Erstaunlicherweise hat es sich gezeigt, dass ein derartiger Fahrschlauch eine verbesserte Pannensicherheit bei gleichzeitig nur geringfügig verschlechtertem Rollwiderstand ermöglicht.

Es hat sich gezeigt, dass sich das expandierte geschlossenporige Elastomer hervorragend als Material für den Schlauchkörper eines Fahrschlauches eignet.

Die Luftdichtigkeit des Fahrschlauchs ist durch das expandierte geschlossenporige Elastomer weiterhin gegeben. Das expandierte geschlossenporige Elastomer vereint eine geringe Massendichte und damit ein, bezogen auf die Materialstärke des Schlauchs, vergleichsweise geringes Gewicht mit hoher Dauerbelastbarkeit. Zudem zeichnet sich der Fahrschlauch aufgrund des hohen Luftanteils des expandierten Elastomers durch einen nur geringen Hystereseverlust aus.

Die geringe Massendichte des expandierten geschlossenporigen Elastomers ermöglicht eine vergrößerte Materialstärke des Schlauchkörpers, wodurch die die Wahrscheinlichkeit eines vollständigen Durchstichs des Schlauchkörpers durch einen Fremdkörper verringerbar ist. Das expandierte geschlossenporige Elastomer weist eine hohe Elastizität auf. Im Falle eines Durchstichs des Fahrschlauchs dichtet dann der Schlauchkörper aus dem expandierten geschlossenporigen Elastomer den Einstichkanal so ab, dass ein größerer Luftverlust vermieden oder verringert wird. Der Fahrschlauch weist somit eine verbesserte Robustheit gegenüber Durchstich und anderen Verletzungen auf. Gleichzeitig ermöglicht der Schlauchkörper aus dem expandierten geschlossenporigen Elastomer durch die eigene Strukturfestigkeit verbesserte Notlaufeigenschaften selbst bei völligem Luftverlust.

Durch den Einsatz des expandierten geschlossenporigen Elastomers ist der Fahrschlauch weiterhin mit geringem Gewicht ausführbar. Ebenso sind die Flexibilität sowie die Fahreigenschaften eines Luftreifens durch einen derartigen Fahrschlauch nur geringfügig eingeschränkt.

Es ist somit ein Fahrschlauch zur Verfügung gestellt, der eine verbesserte Pannensicherheit bei weiterhin gutem Rollwiderstand aufweist.

"Schlauchkörper aus einem Elastomer" bedeutet im Sinne der Anmeldung, dass das Material des Schlauchkörpers ganz oder teilweise aus dem Elastomer besteht. Das Elastomer kann über die gesamte Umlauferstreckung des Schlauchkörpers und/oder über den gesamten Umfang eines senkrecht zur Umlauferstreckungsrichtung U des Schlauchkörpers genommenen Querschnittes des Schlauchkörpers angeordnet sein.

Der Fahrschlauch kann ein geschlossener oder ein offener Fahrschlauch sein.

Der Begriff "Leichtfahrzeug" bezeichnet im Sinne der Anmeldung Fahrzeuge mit einer Leermasse von maximal 425 kg (ohne Batterien bei Elektrofahrzeugen), bevorzugt Fahrräder und/oder Rollstühle und/oder Motorräder und/oder Fahrzeuge der Fahrzeugklasse L im Sinne der EU Verordnung 168/2013, welche jeweils die Erfordernisse der Leermasse von maximal 425 kg erfüllen.

Das Leichtfahrzeug, bevorzugt Fahrrad, kann rein mit Muskelkraft angetrieben sein und somit keinen Antriebsmotor aufweisen. Das Leichtfahrzeug, bevorzugt Fahrrad, kann aber auch einen Antriebsmotor, bevorzugt einen Elektromotor, zum Antrieb des Leichtfahrzeuges aufweisen. Der bevorzugt elektrische Antriebsmotor kann dabei als Hilfsmotor zur Trittunterstützung oder als alleiniger Antrieb des Fahrzeugs ausgelegt sein. Das Leichtfahrzeug, bevorzugt Fahrrad, kann als Lastenfahrzeug ausgelegt sein. Das Leichtfahrzeug kann zwei, drei, vier oder mehr Räder aufweisen.

Kraftfahrzeuge der Fahrzeugklasse L im Sinne der EU Verordnung 168/2013 umfassen insbesondere Fahrzeuge gemäß den Klassen L1e und/oder L2e und/oder L3e und/oder L4e und/oder L5e und/oder L6e.

Im Folgenden werden vorteilhafte Ausführungsformen der Erfindung erläutert.

Eine vorteilhafte Ausführungsform ist dadurch gegeben, dass das Elastomer ein thermoplastisches Elastomer ist.

Thermoplastische Elastomere (TPE) sind mehrphasige Systeme: Sie haben eine die elastischen Eigenschaften bestimmende Weichphase mit einer Glasübergangstemperatur unter der Gebrauchstemperatur, sowie eine die thermoplastischen Eigenschaften bestimmende, in der Weichphase nicht lösliche thermoplastische Hartphase, welche den Schmelzbereich festlegt.

Das thermoplastische Elastomer weist vorteilhafte Recyclingeigenschaften auf. Das thermoplastische Elastomer kann durch Wärmeeinwirkung verflüssigt und somit auf einfache Art und Weise von weiteren Materialien des Fahrschlauchs getrennt werden. Das so extrahierte thermoplastische Elastomer kann wiederverwertet werden.

Es eignen sich unterschiedliche thermoplastische Elastomere.

Eine vorteilhafte Ausführungsform ist dadurch gegeben, dass das thermoplastische Elastomer ein, insbesondere durch Block-Copolymerisation hergestelltes, Block-Copolymerisat, bevorzugt ein thermoplastisches Polyurethan (TPE-U), ist. Block-Copolymerisate eignen sich für den Schlauchkörper sowohl als expandiert geschlossenporig vorliegende TPE als auch als homogen vorliegende TPE, bevorzugt als expandiert geschlossenporig vorliegende TPE.

Vorteilhafte Block-Copolymerisate sind thermoplastische Polyurethane (TPE-U) aus Polyester und Polyurethan (PU) und/oder aus Polyether (PE) und Polyurethan (PU) und/oder thermoplastische Polystyrol-Polydien-Blockcopolymere (TPE-S) aus Polyisopren (IR) und Polystyrolen (PS) und/oder aus Polyethylen (PE) und Polystyrolen (PS) und/oder aus Polybutylen (PB) und Polystyrolen (PS) und/oder thermoplastische Polyester-Elastomere (TPE-E) aus Polyether und aromatischem Polyester und/oder thermoplastische Polyether-Polyamid-Elastomere (TPE-A) aus Polyether und aliphatischem Polyamid und/oder Ethylen-Vinylacetat-Kautschuk (EVM) mit 20-40 Gewichtsprozent Vinylacetat.

Als besonders vorteilhaft hat sich thermoplastisches Polyurethan (TPE-U) herausgestellt. Thermoplastisches Polyurethan zeichnet sich durch vorteilhafte Rollwiderstandseigenschaften und durch seine hervorragenden Recyclingeigenschaften aus. Eine Auftrennung der Materialien durch heiße Filtration ermöglicht sortenreines Stoffrecycling.

Es eigenen sich weitere thermoplastische Elastomere.

Vorteilhaft sind etwa Mischungen unverträglicher Polymere, wie zum Beispiel unvernetzte thermoplastische Elastomere (TPE-O) aus Ethylen-Propylen-Kautschuk (EPM) und Polypropylen (PP) und/oder aus Ethylen-Propylen-DienKautschuk (EPDM) und Polypropylen (PP) und/oder vernetzte thermoplastische Elastomere (TPE-V ) aus Ethylen-Propylen-Kautschuk (EPDM) und Polypropylen (PP) und/oder aus Acrylnitril-Butadien-Kautschuk (Nitrilkautschuk, NBR) und Polypropylen (PP) und/oder aus Ethylen-Vinylacetat-Copolymere (EVA) und Polyvinylidenchlorid (PVDC).

Vorteilhaft sind auch mit Weichmachern versetzte teilkristalline Polymere, wie zum Beispiel mit Weichmachern versetztes Polyvinylchlorid (Weich-PVC) und/oder mit Olefinen versetzter Naturkautschuk.

Weitere Möglichkeiten folgen aus der Modifikation von Kautschuken, wie zum Beispiel durch Hydrochlorierung von Naturkautschuk sowie schwefelsaure Cyclisierung von Naturkautschuk.

Eine vorteilhafte Ausführungsform ist dadurch gegeben, dass das Elastomer ein Polyethylen oder ein Polyurethan, bevorzugt ein thermoplastisches Polyethylen oder ein thermoplastisches Polyurethan, besonders bevorzugt ein thermoplastisches Polyurethan, ist.

Polyurethan, insbesondere thermoplastisches Polyurethan zeichnet sich durch vorteilhafte Rollwiderstandseigenschaften aus. Thermoplastisches Polyurethan zeichnet sich auch durch seine hervorragenden Recyclingeigenschaften aus. Eine Auftrennung der Materialien durch heiße Filtration ermöglicht sortenreines Stoffrecycling.

Expandiertes geschlossenporiges Polyurethan zeichnet sich dadurch aus, dass es nur geringe Hystereseverluste bei Verformung generiert. Dies führt zu einem geringen Rollwiderstand. Es kann sich um das von der BASF SE unter dem Markennamen Infinergy ^{®} vertriebene Material handeln.

Eine vorteilhafte Ausführungsform ist dadurch gegeben, dass der Schlauchkörper eine minimale Materialstärke Dmin von mindestens 2 mm, bevorzugt von mindestens 5 mm, besonders bevorzugt von mindestens 8 mm, aufweist.

Die Materialstärke, insbesondere die minimale Materialstärke Dmin und/oder die maximale Materialstärke Dmax, ist gemessen am drucklosen Schlauchkörper senkrecht zu einer äußeren Oberfläche des Schlauchkörpers.

Die vergrößerte Materialstärke des Schlauchkörpers verringert die Wahrscheinlichkeit eines vollständigen Durchstichs des Schlauchkörpers durch einen Fremdkörper weiter. Durch die vorteilhafte Elastizität des expandierten geschlossenporigen Elastomers sowie den Wert Dmin von mindestens 2 mm, bevorzugt von mindestens 5 mm, besonders bevorzugt von mindestens 8 mm, der minimalen Materialstärke des Schlauchkörpers ist die Abdichtung des Einstichkanals im Falle eines Durchstichs des Schlauchkörpers weiter verbessert. Der Fahrschlauch weist somit eine deutlich verbesserte Robustheit gegenüber Durchstich und anderen Verletzungen auf. Gleichzeitig ermöglicht der Schlauchkörper aus dem expandierten geschlossenporigen Elastomer mit der vergrößerten minimalen Materialstärke Dmin durch die eigene Strukturfestigkeit verbesserte Notlaufeigenschaften selbst bei völligem Luftverlust.

Trotz der vergrößerten minimalen Materialstärke Dmin des Schlauchkörpers weist der Schlauchkörper durch den Einsatz des expandierten geschlossenporigen Elastomers nur ein geringes Mehrgewicht gegenüber einem herkömmlichen Fahrschlauch aus Gummimaterial auf. Ebenso sind die Flexibilität sowie die Fahreigenschaften eines Luftreifens durch einen derartigen Fahrschlauch nur geringfügig eingeschränkt.

Eine vorteilhafte Ausführungsform ist dadurch gegeben, dass die Materialstärke des Schlauchkörpers eine Variation (Dmax - Dmin) / (Dmax + Dmin) von maximal 0,20, bevorzugt maximal 0,13, aufweist, wobei Dmax eine maximale Materialstärke des Schlauchkörpers ist.

Ein derartiger Fahrschlauch mit einer weitgehend konstanten Materialstärke ist besonders einfach in seiner Herstellung.

Die Materialstärke, insbesondere die maximale Materialstärke Dmax, ist gemessen am drucklosen Schlauchkörper senkrecht zu einer äußeren Oberfläche des Schlauchkörpers.

Eine vorteilhafte Ausführungsform ist dadurch gegeben, dass der Schlauchkörper zumindest in seinem Zenit eine bevorzugt in Umlauferstreckungsrichtung U umlaufende Verdickung aufweist, wobei für die Materialstärke im Zenit Dz gilt, dass Dz/Dmin > 1,5, bevorzugt Dz/Dmin > 2, besonders bevorzugt Dz/Dmin > 2,5.

Ein derartiger Fahrschlauch ist im Bereich der größten Beanspruchung gegenüber Durchstich durch die vergrößerte Materialstärke im Zenit besonders geschützt. Der Fahrschlauch weist somit einen weiter verbesserten Pannenschutz, insbesondere gegenüber Durchstich, bei weiterhin geringer Beeinträchtigung des Rollwiderstands auf.

Die Materialstärke, insbesondere die Materialstärke im Zenit Dz, ist gemessen am drucklosen Schlauchkörper senkrecht zu einer äußeren Oberfläche des Schlauchkörpers. Die Materialstärke im Zenit Dz ist gemessen in der axialen Mitte des Fahrschlauchs.

Eine vorteilhafte Ausführungsform ist dadurch gegeben, dass der Schlauchkörper zumindest in seinem Zenit eine bevorzugt in Umlauferstreckungsrichtung U umlaufende Verdickung aufweist, wobei für die Materialstärke im Zenit Dz gilt, dass Dz/Dmin > 2, bevorzugt Dz/Dmin > 3, besonders bevorzugt Dz/Dmin > 4, und bevorzugt, dass sich die Verdickung in einer vom Fahrschlauch eingeschlossenen Innenraum in einem Querschnitt des Fahrschlauches, welcher auf eine kreisrunde Außenkontur gebracht sein kann, konvex erstreckt, wobei der Querschnitt senkrecht zur Umlauferstreckungsrichtung U genommen ist.

Die bevorzugt konvexe Verdickung verläuft dabei zumindest im Zenit. Im Falle eines Notlaufs erwirkt die in den Innenraum insbesondere konvex erstreckte Erhebung eine Abstützung sowie verbesserte Seitenführungseigenschaften. Die Notlaufeigenschaften sind somit verbessert. Gleichzeitig ist bei geringem Materialeinsatz der besonders beanspruchte Bereich des Fahrschlauchs besonders gut geschützt.

Als besonders geeignet für eine Abstützung im Notlauf hat sich eine V-förmige konvexe Verdickung herausgestellt, wobei die Spitze des Vs abgerundet sein kann.

Eine vorteilhafte Ausführungsform ist dadurch gegeben, dass der Schlauchkörper zumindest in seinem Zenit eine bevorzugt in Umlauferstreckungsrichtung U umlaufende Verdickung aufweist, wobei für die Materialstärke im Zenit Dz gilt, dass Dz/Dmin > 1,5, bevorzugt Dz/Dmin > 2, besonders bevorzugt Dz/Dmin > 2,5, wobei die Verdickung einen mondsichelförmigen, bevorzugt eine abgeflachte Innenkrümmung aufweisenden, senkrecht zur Umlauferstreckungsrichtung U des Fahrschlauchs genommen Querschnitt aufweist. Der Querschnitt kann am auf eine kreisrunde Außenkontur gebrachten Fahrschlauch genommen sein.

Hierdurch ist bei geringem Materialeinsatz der Verdickung der besonders beanspruchte Bereich des Fahrschlauchs besonders gut geschützt.

Eine vorteilhafte Ausführungsform ist dadurch gegeben, dass der Schlauchkörper zu mindestens 90 Gew.-%, bevorzugt zu mindestens 95 Gew.-%, besonders bevorzugt zu 100 Gew.-%, aus dem Elastomer gebildet ist.

Eine vorteilhafte Ausführungsform ist dadurch gegeben, dass der Fahrschlauch geeignet ist für einen Fahrzeugluftreifen mit einer Reifenbreite mit einem Wert von 18 mm bis 122 mm, bevorzugt von 23 mm bis 65 mm oder von 50 mm bis 122 mm.

Ein Fahrschlauch wird in der Regel passend zur Reifenbreite und -größe des Fahrzeugluftreifens, gewählt, mit welchem er zusammen auf einer Felge zum Rad montiert und als Teil des Rades am Fahrzeug angebracht wird bzw. ist. Ein Fahrschlauch ist dabei meist mit mehreren Reifenbreiten kompatibel. Mit welchen Reifenbreiten der konkrete Fahrschlauch kompatibel ist, wird in der Regel vom Hersteller angegeben. Die Reifenbreite ist die nominelle Querschnittsbreite des Reifens gemäß E.T.R.T.O. in der zum Anmeldezeitpunkt dieser Patentanmeldung geltenden Fassung.

Der Fahrschlauch eignet sich hervorragend für Fahrzeuge mit Reifen der angegebenen Reifenbreite zur Verbesserung der Pannensicherheit bei gleichzeitig vorteilhaftem Rollwiderstand, bevorzugt für Rollstühle und/oder Fahrräder mit Reifen der angegebenen Reifenbreite.

Ein Fahrschlauch kann vorgesehen und geeignet sein für eine Reifenbreite mit einem Wert von 23 mm bis 42 mm. Ein solcher Fahrschlauch eignet sich für ein Rennrad.

Ein Fahrschlauch kann vorgesehen und geeignet sein für eine Reifenbreite mit einem Wert von 30 mm bis 65 mm. Ein solcher Fahrschlauch eignet sich hervorragend für ein Gravelbike, City- oder Treckingrad.

Ein Fahrschlauch kann vorgesehen und geeignet sein für eine Reifenbreite mit einem Wert von 32 mm bis 55 mm. Ein solcher Fahrschlauch eignet sich hervorragend für einen Rollstuhl.

Ein Fahrschlauch kann vorgesehen und geeignet sein für eine Reifenbreite mit einem Wert von 50 mm bis 122 mm. Ein solcher Fahrschlauch eignet sich hervorragend für ein Mountainbike.

Eine vorteilhafte Ausführungsform ist dadurch gegeben, dass es sich um einen Fahrschlauch für ein Fahrrad und/oder einen Rollstuhl handelt.

Der Begriff "Fahrrad" umfasst im Sinne der Anmeldung Fahrräder unterschiedlichster Art, insbesondere Fahrräder mit zwei oder mehr Rädern.

Das Fahrrad kann rein mit Muskelkraft angetrieben sein und somit keinen Antriebsmotor aufweisen. Das Fahrrad kann aber auch einen Antriebsmotor, bevorzugt einen Elektromotor, zum Antrieb des Fahrrades aufweisen. Der bevorzugt elektrische Antriebsmotor kann dabei als Hilfsmotor zur Trittunterstützung, wie beispielsweise bei einem Pedelec oder einem S-Pedelec, ausgelegt sein. Es kann sich dabei um ein Lastenrad handeln, wie es beispielsweise zur Paketauslieferung genutzt wird.

Eine verbesserte Pannensicherheit bei gleichzeitig geringem Rollwiderstand ist bei Fahrrädern von großer Wichtigkeit. Der erfindungsgemäße Fahrschlauch ermöglicht eine entsprechende Verbesserung, ohne aufwändig den Fahrradmantel an sich zu ändern.

Bei einem Einsatz des Fahrschlauches bei einem Fahrrad mit motorischem Hilfsantrieb ist ein hoher Pannenschutz vorteilhaft, da er die Zuverlässigkeit des Fahrzeuges erhöht. Gleichzeitig ermöglicht der geringe Rollwiderstand eine große Reichweite des Fahrrades.

Eine Erhöhung der Pannensicherheit ist auch für einen Rollstuhl von größter Wichtigkeit.

Eine vorteilhafte Ausführungsform ist dadurch gegeben, dass es sich um einen Fahrschlauch für ein Leichtfahrzeug mit einem motorischen Antrieb, bevorzugt mit einem motorischen Hilfsantrieb oder einem rein motorischen Antrieb, handelt.

Auch für Leichtfahrzeuge mit einem motorischen Antrieb ist ein derartiger Fahrschlauch mit verbesserter Pannensicherheit und großer Reichweite vorteilhaft.

Der bevorzugt elektrische motorische Hilfsantrieb kann als Hilfsmotor der Trittunterstützung dienen.

Der Fahrschlauch kann geeignet sein für ein Leichtfahrzeug mit einem rein motorischen Antrieb, etwa für ein entsprechendes Kleinkraftrad und/oder Leichtkraftrad und/oder Kleinkraftrad und/oder Kraftrad und/oder Motorrad und/oder leichtes Squad.

Die Erfindung betrifft auch ein Fahrzeugrad für ein Fahrzeug, bevorzugt für ein Leichtfahrzeug, besonders bevorzugt für ein Fahrrad und/oder einen Rollstuhl und/oder ein Motorrad, aufweisend eine Felge, einen auf der Felge montierten erfindungsgemäßen Fahrschlauch für das Fahrzeug und einen auf der Felge montierten Fahrzeugluftreifen für das Fahrzeug. Der Fahrschlauch ist für den Fahrzeugluftreifen geeignet.

Ein solches Fahrzeugrad weist eine hohe Pannensicherheit bei gleichzeitig nur geringfügig verringerten Rollwiderstandseigenschaften auf. Bevorzugt handelt es sich um ein Fahrzeugrad für ein Leichtfahrzeug, besonders bevorzugt für ein Fahrrad und/oder einen Rollstuhl und/oder ein Motorrad.

Alle in dieser Beschreibung wiedergegebenen Ausführungsformen der erfindungsgemäßen Schläuche bzw. Fahrzeugräder stellen Beispiele der Ausgestaltung der Erfindung dar und sind nicht einschränkend zu sehen. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnungen, die Ausführungsbeispiele darstellen, näher erläutert.

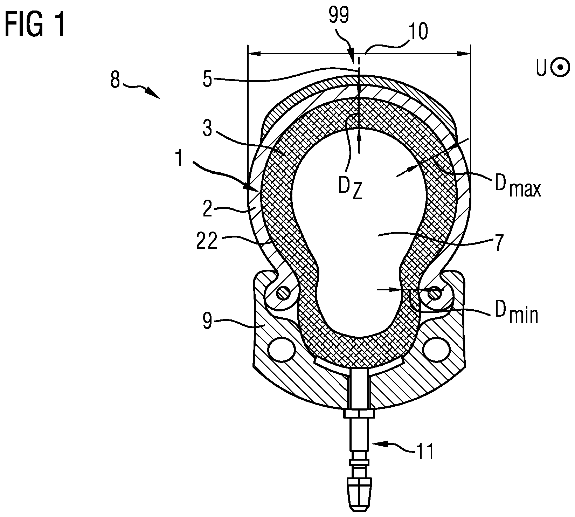

Dabei zeigt die
Fig. 1 bis Fig. 3 jeweils einen Querschnitt eines Fahrzeugrades aufweisend einen erfindungsgemäßen Fahrschlauch.

Die Fig. 1 bis Fig. 3 zeigen jeweils einen Querschnitt eines Fahrzeugrades 8 aufweisend eine Felge 9, einen auf der Felge montierten einen auf der Felge montierten Fahrzeugluftreifen 2 und einen für den Fahrzeugluftreifen geeigneten erfindungsgemäßen Fahrschlauch 1.

Es handelt sich um ein Rad für ein Leichtfahrzeug, bevorzugt für ein Fahrrad. Entsprechend ist der Fahrschlauch 1 ein Fahrschlauch für einen Fahrzeugluftreifen für ein Leichtfahrzeug, bevorzugt für ein Fahrrad.

Der Fahrschlauch 1 weist einen Schlauchkörper 3 aus einem expandierten geschlossenporigen Elastomer sowie einen Ventilschaft 11 auf. Das expandierte geschlossenporige Elastomer ist ein geschlossenporiger Schaum. Das expandierte geschlossenporige Elastomer ist über die gesamte Umlauferstreckung des Schlauchkörpers und über den gesamten Umfang eines senkrecht zur Umlauferstreckungsrichtung U genommenen Querschnitts des Schlauchkörpers angeordnet.

Der Schlauchkörper ist zu mindestens 90 Gew.-%, bevorzugt zu mindestens 95 Gew.-%, besonders bevorzugt zu 100 Gew.-%, aus dem Elastomer gebildet. Das Elastomer kann ein thermoplastisches Elastomer ein. Das thermoplastische Elastomer kann ein, insbesondere durch Block-Copolymerisation hergestelltes, Block-Copolymerisat sein. Das thermoplastische Elastomer kann thermoplastisches Polyurethan sein. Es eignen sich aber auch andere Elastomere.

Der Schlauchkörper 3 weist eine minimale Materialstärke Dmin von mindestens 2 mm, bevorzugt von mindestens 5 mm, besonders bevorzugt von mindestens 8 mm, auf. Dargestellt ist der montierte und druckbeaufschlagte Fahrschlauch. Die jeweiligen Materialstärke, insbesondere Dmin, Dmax und Dz (siehe unten), sind der Anschaulichkeit halber eingezeichnet. Die Materialstärke, insbesondere Dmin, Dmax und Dz (siehe unten), ist jedoch jeweils gemessen am drucklosen Fahrschlauch senkrecht zu einer von einem vom Schlauchkörper begrenzten Innenraum 7 abgewandten äußeren Oberfläche 22 des Schlauchkörpers 3.

Der Fahrschlauch 1 kann vor der Montage ein geschlossener Fahrschlauch sein oder vor der Montage ein offener Fahrschlauch sein.

Der dargestellte Reifen 8 kann jeweils eine Reifenbreite 10 (nominelle Querschnittsbreite gemäß E.T.R.T.O.) mit einem Wert von 18 mm bis 122 mm, bevorzugt von 23 mm bis 65 mm oder von 50 mm bis 122 mm, aufweisen. Der jeweils zusammen mit dem Reifen 8 dargestellte Fahrschlauch 1 weist dann eine Eignung für die entsprechende Reifenbreite 10 auf.

Der in der Fig. 1 dargestellte Fahrschlauch 1 zeichnet sich dadurch aus, dass der Schlauchkörper 3 eine weitgehend konstante Materialstärke aufweist. Der Schlauchkörper weist eine Variation (Dmax - Dmin) / (Dmax + Dmin) von maximal 0,20, bevorzugt maximal 0,13, auf, wobei Dmin die minimale Materialstärke und Dmax eine maximale Materialstärke des Schlauchkörpers 3 ist.

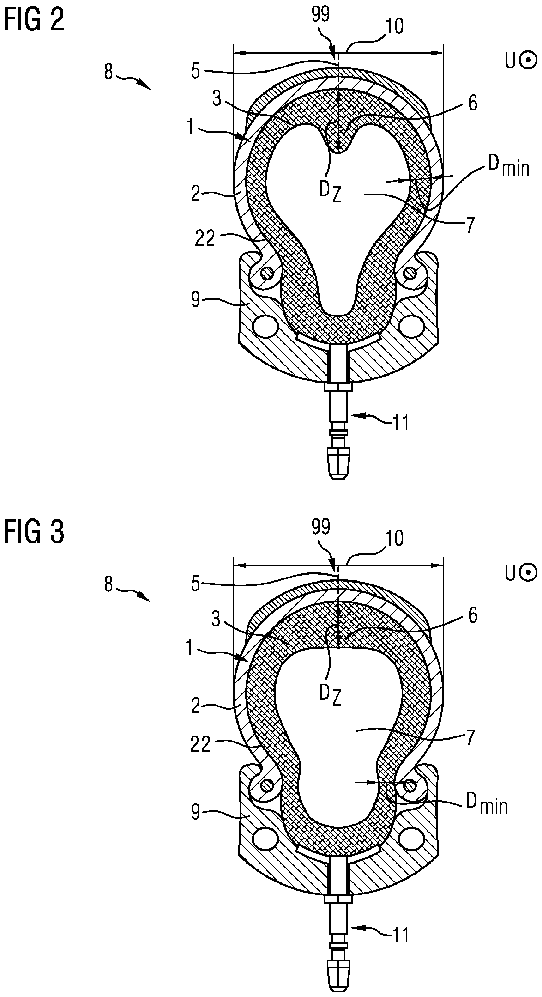

Der in der Fig. 2 und Fig. 3 dargestellte Fahrschlauch 1 zeichnet sich jeweils dadurch aus, dass der Schlauchkörper 3 zumindest in seinem Zenit 99 eine bevorzugt umlaufende Verdickung 6 aufweist, wobei für eine Materialstärke im Zenit Dz gilt, dass Dz/Dmin > 1,5, bevorzugt > 2, besonders bevorzugt >2,5. Die Materialstärke im Zenit Dz ist gemessen in der axialen Mitte 5 des Fahrschlauchs. Es kann sich dabei um die maximale Materialstärke Dmax handeln.

Der in der Fig. 2 dargestellte Fahrschlauch 1 zeichnet sich dadurch aus, dass der Schlauchkörper 3 zumindest in seinem Zenit 99 eine bevorzugt umlaufende Verdickung 6 aufweist und dass sich die Verdickung 6 in einen vom Fahrschlauch eingeschlossenen Innenraum 7 in einem Querschnitt senkrecht zur Umlauferstreckungsrichtung U bevorzugt konvex erstreckt. Für die Materialstärke im Zenit Dz gilt, dass Dz/Dmin > 2, bevorzugt > 3, besonders bevorzugt >4, beträgt. Wie dargestellt, kann die bevorzugt konvexe Verdickung V-förmig mit einer bevorzugt abgerundeten Spitze ausgebildet sein.

In der Fig. 3 weist die Verdickung 6 einen mondsichelförmigen, bevorzugt wie dargestellt mit abgeflachter Innenkrümmung aufweisenden, Querschnitt auf, wobei der Querschnitt senkrecht zur Umlauferstreckungsrichtung U genommen ist. Weiter kann gelten, dass für die Materialstärke im Zenit Dz gilt, dass Dz/Dmin > 2, bevorzugt > 3, besonders bevorzugt >4, beträgt.

Bevorzugt handelt in den Figuren 1 bis 3 jeweils um ein Rad bzw. einen Fahrschlauch für ein Fahrrad. Es kann sich um ein Rennrad, Trackingrad, Mountainbike, Gravelbike/CX oder Pedelec- bzw. S-Pedelec handeln. Der Fahrschlauch 1 ist in seiner Dimension an die Reifenbreite 10 und an den Reifendurchmesser abgestimmt.

Die Erfindung ist aber nicht auf einen Fahrschlauch für einen Fahrradreifen bzw. für ein Fahrrad beschränkt. Gemäß der Erfindung ausgeführte Schläuche bzw. Räder können ferner für Fahrzeuge unterschiedlichen Typs, bevorzugt für ein Leichtfahrzeug, besonders bevorzugt für ein Fahrrad und/oder ein Motorrad und/oder einen Rollstuhl und/oder ein Leichtkraftfahrzeug, sein. Das Leichtfahrzeug kann einen Antriebsmotor als Hilfsmotor zur Trittunterstützung oder als alleinigen Antrieb aufweisen. Das Leichtfahrzeug kann aber auch keinen Antriebsmotor aufweisen.

### Bezugszeichenliste

### (Teil der Beschreibung)

- 1: Fahrschlauch
- 2: Fahrzeugluftreifen
- 3: Schlauchkörper
- 5: axiale Mitte
- 6: Verdickung
- 7: Innenraum
- 8: Fahrzeugrad
- 9: Felge
- 10: Reifenbreite
- 11: Ventilschaft
- 22: äußere Oberfläche des Schlauchkörpers
- 99: Zenit

- Dmin: minimaler Wert der Materialstärke
- Dmax: maximaler Wert der Materialstärke
- Dz: Materialstärke im Zenit
- U: Umlauferstreckungsrichtung

## Patentansprüche

1. Fahrschlauch (1) für ein Fahrzeug, bevorzugt für ein Leichtfahrzeug, besonders bevorzugt für ein Fahrrad und/oder einen Rollstuhl und/oder ein Motorrad, mit einem Schlauchkörper (3) aus einem Elastomer,
**dadurch gekennzeichnet, dass**
das Elastomer ein expandiertes geschlossenporiges Elastomer ist.

2. Fahrschlauch (1) nach Anspruch 1, **dadurch gekennzeichnet, dass** das Elastomer ein thermoplastisches Elastomer, bevorzugt ein Block-Copolymerisat und/oder eine Mischung unverträglicher Polymere und/oder ein mit Weichmachern versetztes teilkristallines Polymer und/oder ein modifizierter Kautschuk, bevorzugt ein Block-Copolymerisat, besonders bevorzugt thermoplastisches Polyurethan (TPE-U), ist.

3. Fahrschlauch (1) nach zumindest einem der vorhergehenden Ansprüche, **dadurch gekennzeichnet, dass** das Elastomer ein Polyethylen oder ein Polyurethan, bevorzugt ein thermoplastisches Polyethylen oder ein thermoplastisches Polyurethan, besonders bevorzugt ein thermoplastisches Polyurethan, ist.

4. Fahrschlauch (1) nach zumindest einem der vorhergehenden Ansprüche, **dadurch gekennzeichnet, dass** der Schlauchkörper (3) eine minimale Materialstärke Dmin von mindestens 2 mm, bevorzugt von mindestens 5 mm, besonders bevorzugt von mindestens 8 mm, aufweist.

5. Fahrschlauch (1) nach zumindest einem der vorhergehenden Ansprüche, **dadurch gekennzeichnet, dass**
die Materialstärke des Schlauchkörpers (3) eine Variation (Dmax - Dmin) / (Dmax + Dmin) von maximal 0,20, bevorzugt maximal 0,13, aufweist, wobei Dmax eine maximale Materialstärke des Schlauchkörpers ist.

6. Fahrschlauch nach zumindest einem der vorhergehenden Ansprüche,
**dadurch gekennzeichnet, dass**
der Schlauchkörper (3) zumindest in seinem Zenit (99) eine bevorzugt in Umlauferstreckungsrichtung U umlaufende Verdickung (6) aufweist, wobei für die Materialstärke im Zenit Dz gilt,
dass Dz/Dmin > 1,5, bevorzugt Dz/Dmin > 2, besonders bevorzugt Dz/Dmin > 2,5.

7. Fahrschlauch (1) nach zumindest Anspruch 6, **dadurch gekennzeichnet, dass** für die Materialstärke im Zenit Dz gilt, dass Dz/Dmin > 2, bevorzugt Dz/Dmin > 3, besonders bevorzugt Dz/Dmin > 4, und bevorzugt, dass sich die Verdickung (6) in einen vom Fahrschlauch eingeschlossenen Innenraum (7) in einem Querschnitt senkrecht zur Umlauferstreckungsrichtung U konvex erstreckt.

8. Fahrschlauch (1) nach zumindest Anspruch 6, **dadurch gekennzeichnet, dass** die Verdickung (6) einen mondsichelförmigen, bevorzugt eine abgeflachte Innenkrümmung aufweisenden, senkrecht zur Umlauferstreckungsrichtung U genommen Querschnitt aufweist.

9. Fahrschlauch (1) nach zumindest einem der vorhergehenden Ansprüche, **dadurch gekennzeichnet, dass** der Schlauchkörper zu mindestens 90 Gew.-%, bevorzugt zu mindestens 95 Gew.-%, besonders bevorzugt zu 100 Gew.-%, aus dem Elastomer gebildet ist.

10. Fahrschlauch (1) nach zumindest einem der vorhergehenden Ansprüche, **dadurch gekennzeichnet, dass** der Fahrschlauch geeignet ist für einen Fahrzeugluftreifen mit einer Reifenbreite (10) von 18 mm bis 122 mm, bevorzugt von 23 mm bis 65 mm oder von 50 mm bis 122 mm.

11. Fahrschlauch (1) nach zumindest einem der vorhergehenden Ansprüche, **dadurch gekennzeichnet, dass** es sich um einen Fahrschlauch für einen Fahrrad und/oder einen Rollstuhl handelt.

12. Fahrschlauch (1) nach zumindest einem der vorhergehenden Ansprüche, **dadurch gekennzeichnet, dass** es sich um einen Fahrschlauch für ein Leichtfahrzeug mit einem motorischen Antrieb, bevorzugt mit einem motorischen Hilfsantrieb oder einem rein motorischen Antrieb, handelt.

13. Fahrzeugrad (8) für ein Fahrzeug, bevorzugt für ein Leichtfahrzeug, besonders bevorzugt für ein Fahrrad und/oder einen Rollstuhl und/oder ein Motorrad, aufweisend eine Felge (9), einen auf der Felge montierten Fahrschlauch (1) gemäß zumindest einem der vorhergehenden Ansprüche und einen auf der Felge montierten Fahrzeugluftreifen (2).
